**Europäisches Patentamt**

**European Patent Office**

**Office européen des brevets**

(11) Veröffentlichungsnummer: **0 158 039**

**B1**

# EUROPÄISCHE PATENTSCHRIFT

(45) Veröffentlichungstag der Patentschrift:
14.12.88

(51) Int. Cl.⁴: **B 60 C 17/04**

(21) Anmeldenummer: **85101533.9**

(22) Anmeldetag: **13.02.85**

(54) Luftreifen-Fahrzeugrad mit einer Notlaufstütze.

(30) Priorität: 21.02.84 DE 8405217 U

(43) Veröffentlichungstag der Anmeldung:
16.10.85 Patentblatt 85/42

(45) Bekanntmachung des Hinweises auf die Patenterteilung:
14.12.88 Patentblatt 88/50

(84) Benannte Vertragsstaaten:
DE FR GB IT SE

(56) Entgegenhaltungen:
DE-B-1 064 275
DE-C-956 380
FR-A-1 407 770
FR-A-2 040 045

(73) Patentinhaber: UNIROYAL ENGLEBERT Reifen
GmbH, Hüttenstrasse 7, D-5100 Aachen (DE)

(72) Erfinder: Zinnen, Norbert, Dipl.- Ing., Auf
Vogelsang 24, D-5100 Aachen (DE)

EP 0 158 039 B1

**Beschreibung**

Die Erfindung bezieht sich auf ein Luftreifen-Fahrzeugrad, bestehend aus einer einteiligen Radfelge mit einer Notlaufstütze und einem Fahrzeugluftreifen. Die Radfelge weist zwei im Axialabstand zueinander angeordnete Felgenschultern zur Aufnahme der Reifenwülste des Fahrzeugluftreifens auf. Die Oberfläche der Notlaufstütze ist verzahnt ausgebildet. Die Innenfäche des Fahrzeugluftreifens ist ebenfalls verzahnt ausgebildet. Im Notlaufbetrieb korrespondieren diese verzahnten Flächen miteinander. Sie sichern die Spurstabilität bzw. verringern die Überlastbeanspruchung, indem sie zeitweilig Umfangskräfte aufnehmen.

Es sind derartige Verzahnungen in Umfangsrichtung nach den DE-PSen-956 380 und 1 064 275 und US-PSen-3 288 193 und 768 684 und derartige Verzahnungen in Querrichtung nach FR-PS-1 407 770, EP-A-148 338 (veröffentlicht am 17.07.85), FR-PS-2 040 045, WO 83/00661 und US-PS-1 091 124 bekannt.

Diese gewährleisten entweder eine Spurhaltung in Fahrtrichtung oder/und eine Kraftaufnahme in Fahrtrichtung. Als Stabilisierungshilfsmittel sind sie verbesserungsfähig.

Ziel der Erfindung ist es, ein Hilfsmittel zum Stabilisieren des Radlaufs im Notlaufbetrieb vorzusehen, durch das ein gewisser Kraft- und Formschluß in Laufrichtung erfolgt, der ein zeitweiliges Festgreifen und Übereinanderwegrutschen der Verzahnungen der korrespondierenden Flächen der Notlaufstütze und des Fahrzeugluftreifens erlaubt.

Erfindungsgemäß wird dies bei einem gattungsgemäßen Fehrzeugrad dadurch erreicht, daß die Oberfläche der Notlaufstütze und die Innenfläche des Fahrzeugluftreifens im Zenithbereich als Rändelung vorliegen.

Durch eine derartige Riffelungsverzahnung ist bei Notlauf, wenn die Flächen von Felgenstütze und Reifen Kontakt haben, ein Kraft- und Formschluß gewährleistet. Hierbei können die rändelgeriffelten Flächen zeitweilig kraft- und formschlüssig greifen und bei Überlast zeitweilig Übereinanderwegrutschen, ehe sie wieder greifen.

Sie können jedoch auch eine kraft- und formschlüssige Verbindung von längerer Dauer schaffen. Dabei ist jedoch Voraussetzung, daß sich die Reifenwülste verhältnismäßig schnell von ihren Wulstsitzen lösen. Die rändelgeriffelten Oberflächen lassen aufgrund der geringen Riffelungstiefe gewisse Relativbewegungen begrenzt zu und sind ein geeignetes Hilfsmittel, um unkontrollierte Bewegungen des Rades im Notlaufbetrieb zu vermeiden.

Die die Rändelungsriffelung tragenden Elemente können als eine besondere Schicht in der Reifeninnenseite bzw. in der Notlaufstützenaußenfläche vorliegen. Es kann eine besondere Platte oder ähnliches Element sein.

An Hand eines Ausführungsbeispiels ist die Erfindung erläutert. Es zeigt

Fig. 1 einen Reifen und eine Felge im Teilquerschnitt,

Fig. 2 einen Reifen und eine Felge abweichender Bauart im Teilquerschnitt,

Fig. 3 eine Einzelheit einer Rändelungsriffelung (Aufsichtausschnitt).

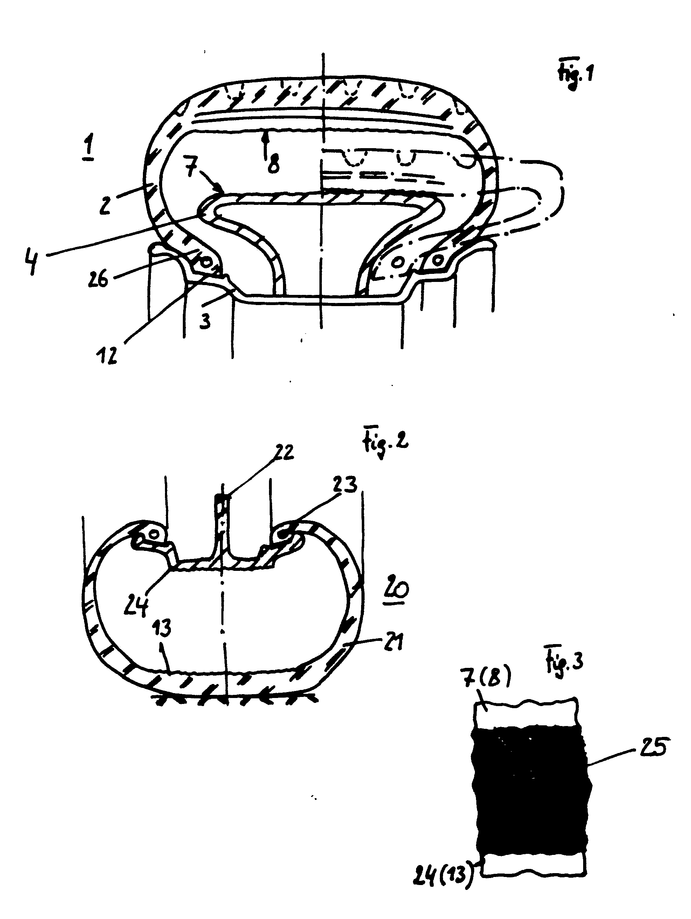

Das Fahrzeugrad 1 nach Fig. 1 besteht aus dem Luftreifen 2 mit den Reifenwülsten 26 und der einteiligen Felge 3 mit den Felgenschultern 12. Die Notlaufstütze ist mit 4 bezeichnet. Die Oberfläche 7 ist gerändelt ausgebildet, so wie dies aus Fig. 3 ersichtlich ist; vgl. Bezugsziffer 25.

Die Innenfläche 8 des Luftreifens 2 ist ebenfalls gerändelt ausgebildet, so wie dies aus Fig. 3 ersichtlich ist; vgl. Bezugsziffer 25. Die Rändelung kann in Form gekreuzter oder rautenähnlicher Riffelung vorliegen und stellt eine Feinverzahnung dar.

Das Fahrzeugrad 20 nach Fig. 2 besteht aus dem Luftreifen 21 mit nach innen umgekrempelten Reifenwülsten 23 und der einteiligen Felge 22. Die Wülste sind radial innen an der Felge angeordnet.

Die Felgenaußenseite 24 kann als Notlaufstützfläche benutzt werden. Sie ist gerändelt ausgebildet, ebenso wie die Reifeninnenseite 13, wie dies aus Fig. 3 ersichtlich ist; vgl. Bezugsziffer 25.

**Patentansprüche**

1. Luftreifen-Fahrzeugrad (1, 20), bestehend aus einer einteiligen Radfelge (3, 22) mit einer Notlaufstütze (4, 24) und einem Fahrzeugluftreifen (2, 21), bei dem die Radfelge (3, 22) zwei im Axialabstand zueinander angeordnete Felgenschultern (12) zur Aufnahme der Reifenwülste (26, 23) des Fahrzeugluftreifens (2, 20) aufweist und die Oberfläche (7) der Notlaufstütze (4, 24) verzahnt ausgebildet ist und bei dem die Innenfläche (8) des Fahrzeugluftreifens (2, 20) ebenfalls verzahnt ausgebildet ist, dadurch gekennzeichnet, daß die Oberfläche (7) und die Innenfläche (8) im Zenithbereich als Rändelung (25) vorliegen.

2. Luftreifen-Fahrzeugrad nach Anspruch 1, dadurch gekennzeichnet, daß die die Rändelung (25) aufweisenden Elemente als getrennte Schichten oder Platten vorliegen.

**Revendications**

1. Roue de véhicule à pneumatique (1, 20), constituée d'une jante monobloc (3, 22) comportant un support de sécurité (4, 24) et d'un pneumatique (2, 21), dans laquelle la jante (3, 22) présente deux épaulements (12), disposés à une certaine distance axiale l'un de l'autre, pour recevoir les bourrelets (26, 23) du pneumatique (2, 20) du véhicule et dans laquelle la surface supérieure (7) du support de sécurité (4, 24) est conçue dentelée, et dans laquelle la surface intérieure (8) du pneumatique (2, 20) est également conçue dentelée, caractérisée en ce que la surface supérieure (7) et la surface intérieure (8) présentent, dans la zone du zénith, un moletage (25).

2. Roue de véhicule à pneumatique selon la revendication 1, caractérisée en ce que les éléments qui présentent le moletage (25) existent sous forme de couches ou plaques distinctes.

**Claims**

1. Vehicle wheel pneumatic tyre (1, 20) with security support (4, 24) integral wheel rim (3, 22) having an security running support (4, 24) and a pneumatic vehicle tyre (2, 21) wherein the wheel rim (3, 22) has two rim shoulders (12) which axially spaced from each other in order to accommodate the tyre beads (26, 23) of the pneumatic vehicle tyre (2, 20), and the upper surface (7) of the security running support (4, 24) is toothed, and wherein the inner surface (8) of the pneumatic vehicle tyre (2, 20) is also toothed, characterised in that the upper surface (7) and the inner surface (8) are provided with milling (25) in the crown region.

2. Vehicle wheel pneumatic tyre according to claim 1, characterised in that the elements having the milling (25) are in the form of separate layers or plates.

Fig. 1

Fig. 2

Fig. 3